# EUROPÄISCHE PATENTANMELDUNG

(11) **EP 2 933 890 A1**
(43) Veröffentlichungstag der Anmeldung: **21.10.2015**
(21) Anmeldenummer: 15151801.6
(22) Anmeldetag: 20.01.2015
(51) Int. Cl.: H02G 3/16, H02G 3/12

(54) **Unterputzeinsatz eines elektrischen Installationsgerätes**

(30) Priorität: 26.03.2014 DE 102014004325
(71) Anmelder: ABB AG, 68309 Mannheim (DE)
(72) Erfinder: Ewers, Manfred, 58239 Schwerte (DE); Lange, Manfred, 44229 Dortmund (DE); Aharroud, Mustafa, 45144 Essen (DE); Diehl, Sven, 57078 Siegen (DE); Mrkajic, Oliver, 58511 Lüdenscheid (DE)

(57) **Zusammenfassung**

Es wird ein Unterputzeinsatz eines elektrischen Installationsgerätes der Gebäudeinstallationstechnik oder Hauskommunikationstechnik mit einem Unterputzgehäuse (40) vorgesehen zur Aufnahme wenigstens einer Leiterplatte (50, 51) vorgeschlagen. In oder auf wenigstens einer Gehäusewand des Unterputzgehäuses (40) sind metallische Stromschienen (53, 73, 83) geführt, die mit elektrischen Anschlüssen auf der Leiterplatte (50, 51) verbindbar sind.

## Beschreibung

Die Erfindung betrifft einen Unterputzeinsatz eines elektrischen Installationsgerätes der Gebäudeinstallationstechnik oder Hauskommunikationstechnik mit einem Unterputzgehäuse, vorgesehen zur Aufnahme wenigstens einer Leiterplatte gemäß den Merkmalen des Oberbegriffs des Anspruchs 1.

Die bekannten Installationsgeräte für die Unterputzmontage sind aus einem Unterputzeinsatz mit einem Tragring und einem auf den Unterputzeinsatz aufsteckbarem Bedienteil oder Funktionsteil aufgebaut. Das elektrische Unterputz-Installationsgerät wird üblicherweise komplettiert durch einen Abdeckrahmen.

Der Unterputzeinsatz wird von einer Unterputzdose aufgenommen, welches in einer Gebäudewand verbaut wird. Das Unterputzgehäuse kann mit Leiterplatten ausgestattet sein, die auf verschiedenen Ebenen innerhalb des Gehäuses angeordnet sind. Zur elektrischen Verbindung der Leiterplatten untereinander oder mit einem auf dem Unterputzeinsatz aufsteckbarem Bedien- oder Funktionsteil werden häufig Steckverbinder oder Flachbandleitungen verwendet. Als nachteilig erweist sich dabei der Platzbedarf der Steckverbinder auf der Leiterplatte oder die erforderliche Anordnung der Flachbandleitungen innerhalb des Gehäuses, insbesondere bei der immer kompakter werdenden Bauweise mit größeren Leistungsdichten der auf den Leiterplatten angeordneten Bauelemente.

Der Erfindung liegt die Aufgabe zugrunde, einen Unterputzeinsatz eines elektrischen Installationsgerätes der Gebäudeinstallationstechnik oder Hauskommunikationstechnik anzugeben, dessen Unterputzgehäuse, insbesondere auf verschiedenen Ebenen angeordnete, Leiterplatten aufweist, die in platzsparender Weise miteinander kontaktierbar sind.

Diese Aufgabe wird erfindungsgemäß gelöst durch einen Unterputzeinsatz eines elektrischen Installationsgerätes der Gebäudeinstallationstechnik oder Hauskommunikationstechnik, wobei in dessen Unterputzgehäuse wenigstens eine, zwei oder mehrere Leiterplatten angeordnet sind. Die Leiterplatten sind auf unterschiedlichen Ebenen, d. h. übereinander angeordnet.

Erfindungsgemäß sind in oder auf wenigstens einer Gehäusewand des Unterputzgehäuses metallische Stromschienen geführt, die mit elektrischen Anschlüssen auf der Leiterplatte verbindbar sind.

Das aus einem elektrisch isolierenden Kunststoff bestehende Gehäuse ist bevorzugt aus einem Zwei-Komponenten-Spritzguss gefertigt, wobei vorteilhafterweise federnde Stromschienen in die Gehäusewand eingespritzt sind.

In einer weiteren Ausführung des erfindungsgemäßen Unterputzeinsatzes sind die Stromschienen aus einer Leiterplattenfolie mit entsprechenden Kontaktstellen für die Verbindung mit den elektrischen Anschlüssen auf der Leiterplatte gebildet. Die Leiterplattenfolie mit den integrierten Stromschienen ist auf wenigstens eine Innenwand des Unterputzgehäuses aufgebracht, vorzugsweise geklebt.

Bevorzugt kann die Kontaktierung der Leiterplatte seitlich durch Berührung mit Federkontakten der Stromschienen erfolgen, da die Stromschienen im Verbund mit der Gehäusewand des Unterputzgehäuses federnd gestaltet sind. Auch kann die Leiterplatte erfindungsgemäß kopfseitig mit Kontaktierungsstellen ausgestattet sein, welche mit den durch die federnden Stromschienen gebildeten Federkontakten eine elektrische Verbindung herstellen.

In einer ersten Ausgestaltung sind die federnd ausgeführten Stromschienen so ausgestaltet, dass an jedem ihrer Enden ein federndes Element zur elektrischen Kontaktierung mit den Kontaktstellen auf der Leiterplatte angeformt ist.

In einer zweiten Ausgestaltung sind die Stromschienenenden jeweils mit einem flächigen Element ausgestattet, dass über Federkontaktstifte, auch als Pogo-Pins bekannt, eine elektrische Kontaktierung mit den Kontaktstellen auf der Leiterplatte bildet.

In einer weiteren Ausgestaltung ist die Kontaktierungen der Stromschienen mit der Leiterplatte über separate Kontaktfedern gelöst, welche auf die Leiterplatte aufgebracht, vorzugsweise aufgelötet, werden.

Die mit der Erfindung erzielbaren Vorteile bestehen insbesondere darin, dass die elektrische Verbindung und Potenzialführung für die elektrische Spannung von der im Unterputzgehäuse befindlichen unteren Leiterplatte auf die elektrischen Anschlüsse einer darüber liegenden Leiterplatte so konzipiert ist, dass die Stromschienen direkt auf oder in der Innenwand eines Unterputzgehäuses angebracht sind und so eine platzaufwendige Steckverbindung zwischen den Leiterplatten im Gehäuse entfällt. Dadurch wird der nutzbare Bauraum auf den Leiterplatten vergrößert und steht damit, beispielsweise für die Aufnahme weiterer elektronischer Bauteile, zur Verfügung. Weiterhin wird eine robuste, einfache und sichere elektrische Kontaktierung zwischen den elektrischen Anschlüssen der Leiterplatten bereitgestellt.

Die Erfindung wird nachstehend anhand der in den Zeichnungen dargestellten Ausführungsbeispiele näher erläutert. Es zeigen:
- **Fig. 1**: eine Schnittansicht eines aus dem Stand der Technik bekannten Unterputzeinsatzes,
- **Fig. 2**: eine Schnittansicht eines weiteren aus dem Stand der Technik bekannten Unterputzeinsatz mit einem aufgestecktem Bedien- oder Funktionsteil,
- **Fig. 3**: eine schematische Schnittdarstellung eines beispielhaften erfindungsgemäßen Unterputzeinsatzes,
- **Fig. 4**: eine Schnittdarstellung durch einen beispielhaften erfindungsgemäße Unterputzeinsatz,
- **Fig. 5**: eine schematische Schnittdarstellung eines weiteren beispielhaften erfindungsgemäßen Unterputzeinsatz mit einem aufgestecktem Bedien- oder Funktionsteil,
- **Fig. 6**: eine weitere Schnittdarstellung durch den erfindungsgemäßen Unterputzeinsatz mit aufgestecktem Bedien- oder Funktionsteil,
- **Fig. 7**: eine Schnittdarstellung durch eine Ausführungsform des erfindungsgemäßen Unterputzeinsatzes mit integriertem Bedienteil, wobei im Unterputzgehäuse des Unterputzeinsatzes zwei Leiterplatten angeordnet sind,
- **Fig. 8**: einzelne Baukomponenten, die für die Montage in das Unterputzgehäuse vorgesehen sind, sowie eine perspektivische Sicht auf das Unterputzgehäuse nach der Montage der einzelnen Baukomponenten im Unterputzgehäuse gemäß einer weiteren erfindungsgemäßen Ausführungsform, wobei in das Unterputzgehäuse eine Folie mit integrierten Stromschienen eingelegt ist,
- **Fig. 9**: Kontaktfeder, Stromschiene und Leiterplatte, die für die Montage in das gezeigte Unterputzgehäuse vorgesehen sind, als getrennte Baukomponenten sowie eine perspektivische Sicht auf das Gehäuse des Unterputzeinsatzes nach der Montage der Stromschienen, der Kontaktfedern und der Leiterplatte im Unterputzgehäuse gemäß einer erfindungsgemäßen nächsten Ausführungsform, und
- **Fig. 10**: Unterputzgehäuse, Leiterplatte mit Kontaktnasen und Stromschienen als getrennte Baukomponenten sowie eine perspektivische Sicht auf das Gehäuse des Unterputzeinsatzes nach der Montage der Stromschienen und der Leiterplatte im Unterputzgehäuse gemäß einer erfindungsgemäßen vorteilhaften Ausführungsform.

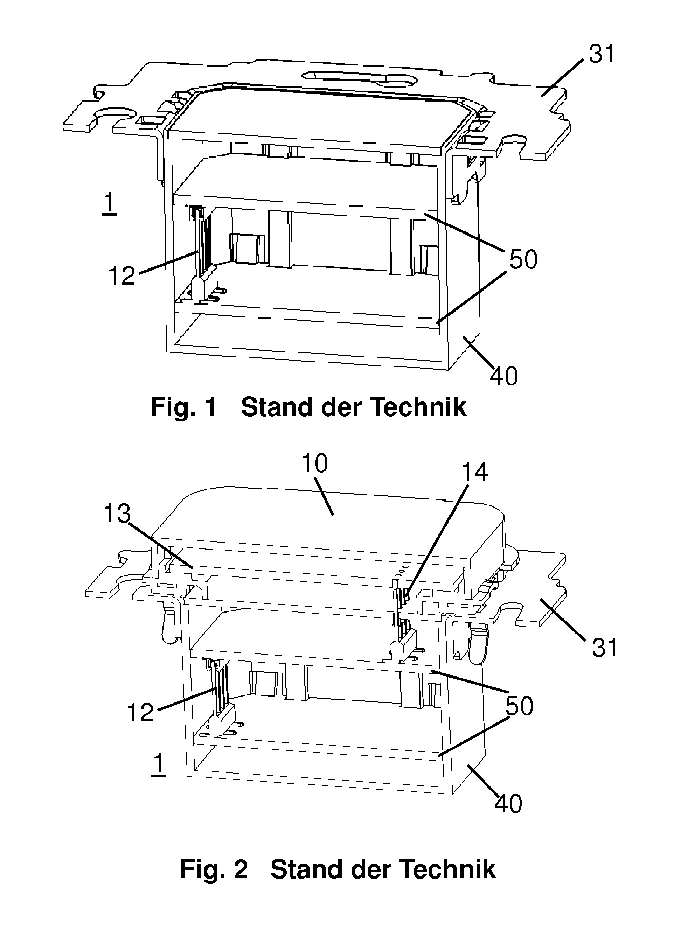

**Figur** 1 zeigt eine Schnittansicht eines aus dem Stand der Technik bekannten Unterputzeinsatzes 1 mit einem Tragring 31 und einem Unterputzgehäuse 40, in dem zwei übereinander liegende Leiterplatten 50 angeordnet sind.

Die elektrische Kontaktierung zwischen den elektrischen Anschlüssen der Leiterplatten ist über eine Steckverbindung 12, bestehend aus Steckerstiften, die in vorgesehene Steckerbuchsen eingreifen, realisiert.

**Figur** 2 zeigt eine Schnittansicht eines weiteren aus dem Stand der Technik bekannten Unterputzeinsatzes 1 mit einem aufgestecktem, beispielsweise als Sensor oder Schalter ausgeführtem Bedien- oder Funktionsteil 10. Im Unterputzgehäuse 40 des Unterputzeinsatzes 1 sind zwei Leiterplatten 50 auf unterschiedlichen Ebenen angeordnet. Eine weitere Leiterplatte 13 befindet sich im Funktionsteil 10. Die Leiterplatten 13, 50 sind auch hier über Buchsen-/ Stiftleisten oder Flachbandleitungen 12, 14 miteinander verbunden. Die Stiftleisten 14 zum Funktionsteil 10 sind durch zusätzliche hier nicht dargestellte Schutzelemente vor einem Verbiegen, beispielsweise bedingt durch die Montage des Funktionsteiles 10, geschützt.

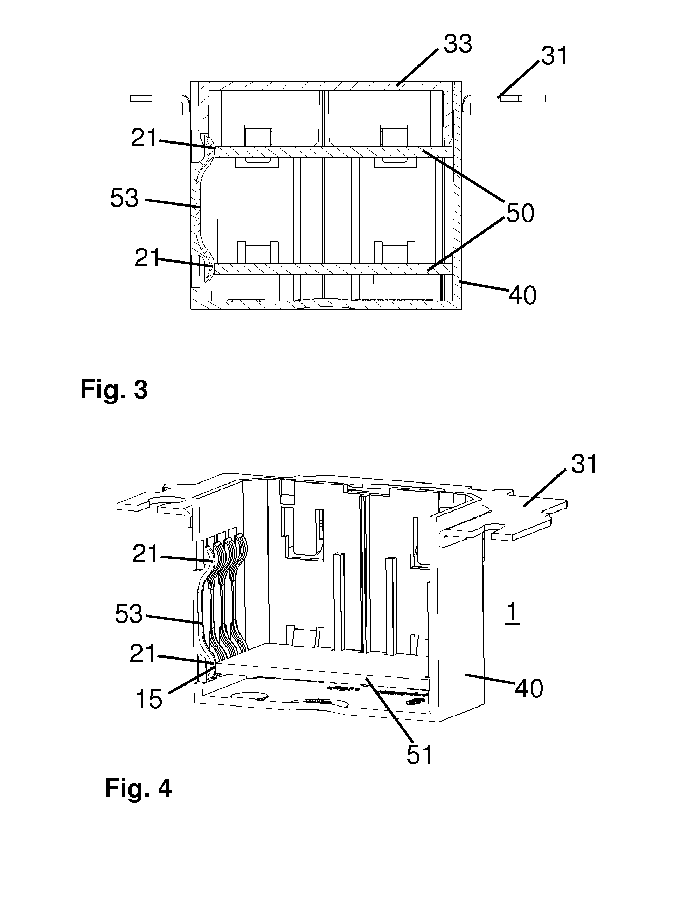

In der **Figur** 3 ist eine Schnittansicht eines beispielhaften erfindungsgemäßen Unterputzeinsatzes gezeigt, welcher aus einem elektrisch isolierenden Kunststoffgehäuse 40, einen Tragring 31 und zwei auf verschiedenen Ebenen innerhalb des Gehäuses 40 angeordneten Leiterplatten 50 mit darauf angeordneten elektronischen Bauelementen aufgebaut ist. Das Gehäuse 40 ist mittels einer Gehäusekappe 33 abgedeckt. Die elektrische Verbindung zwischen den beiden Leiterplatten 50 ist durch in die Gehäusewand des Unterputzgehäuses 40 eingespritzte metallische Stromschienen 53 realisiert. Die Stromschienen 53 sind an ihren Enden mit federnden Elementen 21 ausgestattet, die eine Kontaktierung mit den elektrischen Anschlüssen der Leiterplatten 50 bewirken.

**Figur** 4 zeigt eine Schnittdarstellung durch einen beispielhaften erfindungsgemäßen Unterputzeinsatz 1 mit dem Tragring 31, dem Gehäuse 40 und einer im unteren Bereich des Gehäuses 40 angeordneten unteren Leiterplatte 51. Zur elektrischen Verbindung mit einer weiteren in diesem Beispiel noch nicht montierten Leiterplatte 50 sind die erfindungsgemäß in der Gehäusewand des Unterputzgehäuses 40 eingespritzten Stromschienen 53 vorgesehen, deren Kontaktierungsstellen 15 mit den elektrischen Anschlüssen auf der Leiterplatte 51 mittels der schon in der Figur 3 gezeigten federnden Elemente 21 gebildet sind.

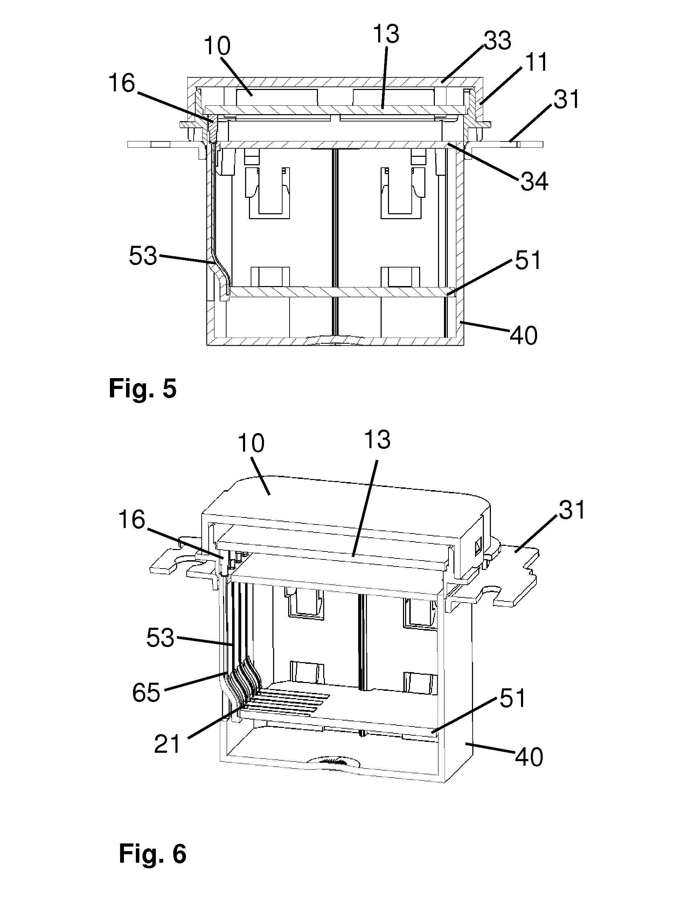

**Figur** 5 zeigt eine Schnittansicht eines weiteren beispielhaften erfindungsgemäßen Unterputzeinsatzes, bestehend aus Gehäuseunterteil 40, Deckel 34 und Tragring 31 zusammen mit einem aufgesteckten Bedien- oder Funktionsteil 10, bestehend aus Sockel 11 und Kappe 33. Im unteren Bereich des Unterputzgehäuse 40 ist eine Leiterplatte 51 angeordnet. Eine weitere Leiterplatte 13 befindet sich im Bedienteil 10. Die untere Leiterplatte 51 bildet mittels der in die Gehäusewand des Unterputzgehäuses 40 eingespritzten Stromschienen 53 eine elektrische Verbindung mit der weiteren im Bedienteil 10 angeordneten Leiterplatte 13. Die Kontaktierung zwischen der in die Gehäusewand des Unterputzgehäuses 40 eingespritzten Stromschienen 53 ist hier durch im Bedienteil 10 angeordnete federnde Kontaktstifte 16 gelöst, die nach dem Aufstecken des Bedienteiles 10 eine elektrische Verbindung zwischen der im Unterputzgehäuse 40 angeordneten unteren Leiterplatte 51 und der im Bedienteil 10 angeordneten weiteren Leiterplatte 13 bilden.

**Figur** 6 zeigt eine weitere Schnittdarstellung durch den erfindungsgemäßen Unterputzeinsatz mit aufgestecktem Bedien- oder Funktionsteil 10, dem Tragring 31, dem Kunststoffgehäuse 40 und einer im unteren Bereich des Gehäuses 40 angeordneten unteren Leiterplatte 51. Zur elektrischen Verbindung mit der im Bedienteil 10 angeordneten Leiterplatte 13 sind die erfindungsgemäß in der Gehäusewand des Unterputzgehäuses 40 eingespritzten Stromschienen 53 vorgesehen, deren Kontaktierungsstellen 15 mit den elektrischen Anschlüssen auf der Leiterplatte 51 mittels der federnden Elemente 21 gebildet sind.

Für die in die Gehäusewand des Unterputzgehäuses 40 eingespritzten Stromschienen 53 sind in wenigstens einer Innenwand des Unterputzgehäuses 40 vertikal zu seinem Gehäuseboden längliche Vertiefungen oder Nuten 65 vorgesehen, in welche ein stromleitendes Material eingebracht ist und so eine Vielzahl von Stromschienen bildet.

Dazu wird in einem ersten Schritt das Kunststoffgehäuse 40 mit vorgefertigten Nuten 65 für die Stromschienen 53 hergestellt. In einem zweiten Schritt wird ein leitfähiger metallener Werkstoff, beispielsweise eine Metalllegierung auf Zinnbasis o.ä., verflüssigt und in die Nuten eingespritzt. Nach Abkühlung des so entstandenen Unterputzgehäuses 40 sind Kunststoff und Zinn fest miteinander verbunden.

Zur Kontaktierung der Leiterplatte 51 mit den Stromschienen 53 ist die Leiterplatte 51 an der zu der die Stromschienen 53 weisenden Innenseite des Gehäuses 40 seitlich mit einer leitfähigen Beschichtung versehen, die während des Kontaktiervorganges mit den entsprechenden Bereichen der Stromschienen 53 verbindbar ist. Eine sichere und robuste Kontaktierung der elektrischen Verbindung ist mittels der federnden Elemente 21 gelöst, welche bevorzugt im Kunststoff der Gehäuseinnenwand integriert sind.

Die elektrische Kontaktierung mit den Kontaktierungsstellen, auch Kontaktstellen genannt, auf der im Bedienteil 10 angeordneten Leiterplatte 13 erfolgt mittels der schon in der Figur 5 gezeigten im Bedienteil 10 angeordneten federnden Kontaktstifte 16.

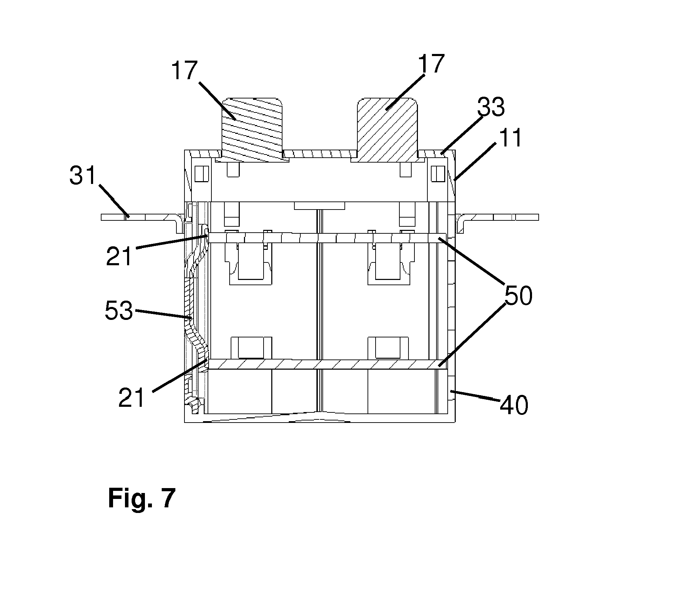

In der **Figur 7** ist eine Schnittdarstellung durch eine Ausführungsform des erfindungsgemäßen Unterputzeinsatzes mit integriertem Bedienteil 10 gezeigt, wobei im Unterputzgehäuse 40 des Unterputzeinsatzes zwei auf verschiedenen Ebenen innerhalb des Gehäuses 40 angeordneten Leiterplatten 50 gezeigt sind. Das Gehäuse 40 ist mittels einem zwei Drehknöpfe 17 aufweisenden Bedienteil- oder Funktionsteil 10 abgedeckt. Die elektrische Verbindung zwischen den beiden Leiterplatten 50 ist durch in die Gehäusewand des Unterputzgehäuses 40 eingespritzte metallische Stromschienen 53 realisiert. Die Stromschienen 53 sind an ihren Enden jeweils mit federnden Elementen 21 ausgestattet, die eine Kontaktierung mit den elektrischen Anschlüssen auf den Leiterplatten 50 bewirken.

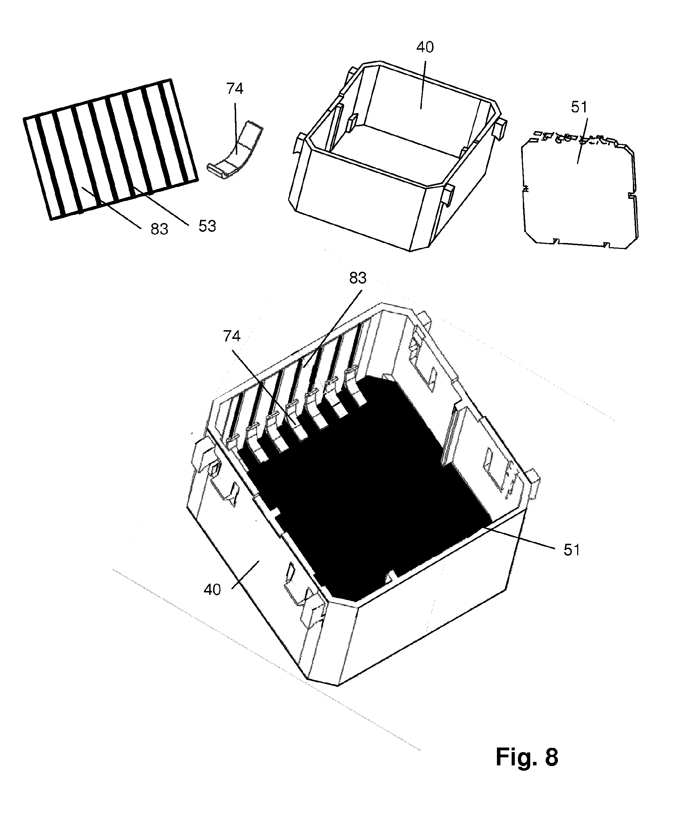

In der **Figur** 8 sind die Stromschienen 53, eine beispielhafte Kontaktfeder 74 und die Leiterplatte 51 als getrennte Baukomponenten, die für die Montage in das gezeigte Unterputzgehäuse 40 vorgesehen sind, dargestellt. Die Stromschienen 53 zur Potentialführung von der im Unterputzgehäuse 40 integrierten Leiterplatte 51 zu den elektrischen Anschlüssen einer über der unteren Leiterplatte 51 angeordneten weiteren Leiterplatte 50 und/oder zum Bedienteil 10 sind in dieser Ausführungsform von einer Folie 83 mit integrierten Stromschienen 53 gebildet.

Weiterhin ist eine perspektivische Sicht auf das Gehäuse 40 des Unterputzeinsatzes nach der Montage der Folie 83 mit den integrierten Stromschienen 53, der Kontaktfedern 74 und der unteren Leiterplatte 51 im Unterputzgehäuse 40 gezeigt.

Um eine Potenzialführung auf der Gehäusewand zu ermöglichen, ist die Folie 83 mit den integrierten Stromschienen 53 auf die Gehäusewand geklebt. Die Folie 83 ist so beschaffen, dass die Kontaktstellen für die elektrische Verbindung zu den Kontaktstellen auf der Leiterplatte 51 offen liegen. Die Kontaktierung der Kontaktstellen auf der Leiterplatte 51 mit den Stromschienen 53 ist bevorzugt durch Federkontakte mittels der Kontaktfedern 74 ausgeführt, welche auf die Leiterplatte 51 aufgelötet sind.

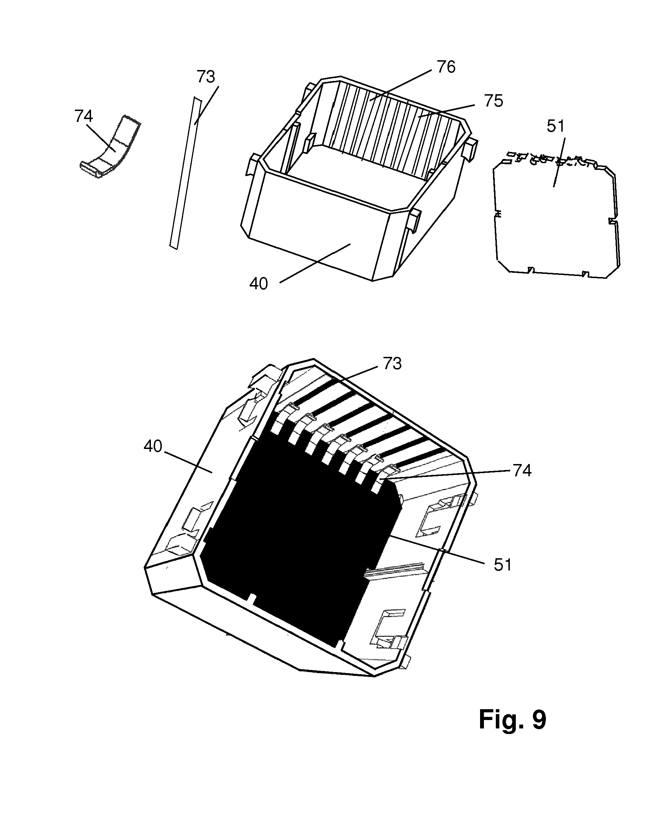

Die **Figur** 9 zeigt eine beispielhafte Kontaktfeder 74, eine beispielhafte Stromschiene 73, das Unterputzgehäuse 40 und die Leiterplatte 51 als getrennte Baukomponenten sowie eine perspektivische Sicht auf das Gehäuse 40 nach der Montage der Stromschienen 73, der Kontaktfedern 74 und der Leiterplatte 51 im Unterputzgehäuse 40 gemäß einer erfindungsgemäßen nächsten Ausführungsform.

Erfindungsgemäß weist wenigstens eine Innenwand des Unterputzgehäuses 40 vertikal zu seinem Gehäuseboden längliche Vertiefungen bzw. Nuten 75 und verformbare Quetschrippen 76 als Anlageflächen für die Stromschienen 73 auf, wobei in die länglichen Vertiefungen 75 jeweils einzelne Stromschienen 73 eingeschoben und mittels der verformten Quetschrippen 76 an der Gehäusewand befestigt sind.

In vorteilhafter Weise wird durch die von den Quetschrippen 76 erzeugte Anpresskraft eine feste Umschließung der Stromschienen 73 bewirkt. Damit ist die elektrische Verbindung zwischen den elektrischen Anschlüssen der Leiterplatte 51 im Unterputzgehäuse 40 und den elektrischen Anschlüssen auf einer weiteren in dieser Ausführungsform noch nicht montierten Leiterplatte 50, 13 besonders unempfindlich gegen Vibrationseinwirkungen.

Die Kontaktierungen der einzelnen, an ihren Enden federnd ausgeführten, Stromschienen 73 sind über separate Kontaktfedern 74 gelöst, welche auf die Leiterplatte 51 vor deren Einbau in das Unterputzgehäuse 40 aufgebracht, vorzugsweise aufgelötet werden.

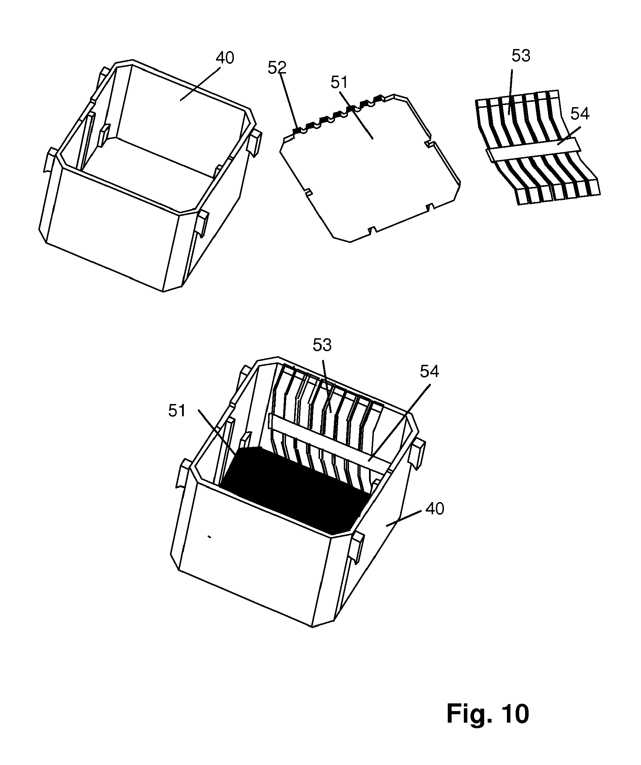

In **Figur** 10 sind ein Unterputzgehäuse 40, eine Leiterplatte 51 und Stromschienen 53 als getrennte Baukomponenten sowie eine perspektivische Sicht auf das Unterputzgehäuse 40 nach der Montage der Stromschienen 53 und der unteren Leiterplatte 51 in das Unterputzgehäuse 40 gemäß einer vorteilhaften erfindungsgemäßen Ausführungsform dargestellt.

In dieser Ausführungsform sind die Stromschienen 53, die vorzugsweise aus leitendem Flachbandmaterial bzw. Flachbandleitungen bestehen, in einer Kunststoffstrebe 54 miteinander verbunden und werden als Baugruppen an wenigstens einer Innenwand des Unterputzgehäuses 40 befestigt. Die Verbindung mit der Gehäusewand kann beispielsweise so erfolgen, dass die Baugruppe bestehend aus Kunststoffstreben 54 und Stromschienen 53 bei der Stromschienenherstellung des Unterputzgehäuses 40 in das Spritzgießwerkzeug eingelegt und dann umspritzt wird, so dass die Stromschienen 53 sicher mit der Gehäusewand verbunden sind.

Für die sichere und stabile Kontaktierung der Leiterplatte 51 mit den Stromschienen 53 ist die Leiterplatte 51 seitlich mit einer leitfähigen Beschichtung 52, als Kontaktnasen ausgeführt, versehen, die bei einem Kontaktierungsvorgang mit den entsprechenden Bereichen der Stromschienen 53 verbindbar ist. Dazu sind die einzelnen Stromschienen 53, bevorzugt an ihren Enden, federnd konstruiert, so dass damit eine sichere elektrische Kontaktierung zwischen den elektrischen Anschlüssen der im Unterputzgehäuses befindlichen Leiterplatte 51 und den elektrischen Anschlüssen einer weiteren Leiterplatte 13, 50 und/oder des Bedien- oder Funktionsteiles 10 bereitgestellt ist.

### Bezugszeichenliste

- 1: Unterputzeinsatz
- 10: Bedienteil
- 11: Sockel des Bedien- oder Funktionsteiles
- 12: Steckverbindung, Buchsen-/ Steckerleiste
- 13: in das Bedienteil integrierte weitere Leiterplatte
- 14: elektrische Kontaktierung mit dem Bedienteil
- 15: elektrische Kontaktierungsstelle
- 16: federnde Kontaktstifte
- 17: Drehknopf
- 21: federndes Element
- 31: Tragring
- 33: Gehäusekappe, Bedienteilgehäuse
- 34: Deckel des Unterputzeinsatzes
- 40: Unterputzgehäuse
- 50: Leiterplatte
- 51: untere Leiterplatte
- 52: seitliche leitfähige Beschichtungen, Kontaktnasen
- 53: Stromschiene
- 54: Kunststoffaufhängung, Kunststoffstrebe
- 65: längliche Vertiefung, Nut
- 73: Stromschiene
- 74: Kontaktfeder, federndes Element
- 75: längliche Vertiefung , Nut
- 76: Quetschrippe
- 83: Folie mit integrierten Stromschienen

## Patentansprüche

1. Unterputzeinsatz eines elektrischen Installationsgerätes der Gebäudeinstallationstechnik oder Hauskommunikationstechnik mit einem Unterputzgehäuse (40), vorgesehen zur Aufnahme wenigstens einer Leiterplatte oder zwei oder mehrerer übereinander angeordneten Leiterplatten (50, 51), **dadurch gekennzeichnet, dass** in oder auf wenigstens einer vertikal zum Gehäuseboden verlaufenden Gehäusewand des Unterputzgehäuses (40) metallische Stromschienen (53, 73, 83) geführt sind, die mit elektrischen Anschlüssen auf der Leiterplatte (50, 51) verbindbar sind.

2. Unterputzeinsatz nach einem der Ansprüche 1, **dadurch gekennzeichnet, dass** wenigstens eine Innenwand des Unterputzgehäuses (40) mit einer Folie mit integrierten Stromschienen (83) mit Kontaktstellen für die Verbindung mit den elektrischen Anschlüssen ausgestattet ist, wobei die Folie (83) mit den integrierten Stromschienen (53) auf der Innenwand des Unterputzgehäuses (40) befestigt, vorzugsweise geklebt, ist.

3. Unterputzeinsatz nach einem der Ansprüche 1 oder 2, **dadurch gekennzeichnet, dass** die Kontaktierungen der Stromschienen (53, 73) mit der Leiterplatte (50, 51) über separate Kontaktfedern oder federnde Elemente (74) gelöst sind, welche auf die Leiterplatte (50, 51) aufgebracht, vorzugsweise aufgelötet, sind.

4. Unterputzeinsatz nach einem der Ansprüche 1 bis 3, **dadurch gekennzeichnet, dass** die Kontaktierung durch ein Andrücken der auf der Leiterplatte (50, 51) befindlichen Kontaktfedern oder federnde Elemente (74) an die Stromschienen (53, 73, 83) bewirkt ist.

5. Unterputzeinsatz nach einem der Ansprüche 1, 3 oder 4, **dadurch gekennzeichnet, dass** die wenigstens eine Gehäusewand des Unterputzgehäuses (40) vertikal zu seinem Gehäuseboden längliche Vertiefungen (75) und verformbaren Quetschrippen (76) als Anlageflächen für die Stromschienen (73) aufweist, wobei in die länglichen Vertiefungen (75) jeweils einzelne Stromschienen (73) eingeschoben und mittels der Quetschrippen (76) an der Gehäusewand befestigt sind.

6. Unterputzeinsatz nach einem der Ansprüche 1, **dadurch gekennzeichnet, dass** die Stromschienen (53) aus leitendem Flachbandmaterial bzw. Flachbandleitungen gebildet sind.

7. Unterputzeinsatz nach Anspruch 6, **dadurch gekennzeichnet, dass** die in der Gehäusewand des Unterputzgehäuses (40) geführten Stromschienen (53), insbesondere an ihren Enden, federnd gestaltet sind.

8. Unterputzeinsatz nach einem der Ansprüche 6 oder 7, **dadurch gekennzeichnet, dass** die Stromschienen (53) in einer Kunststoffaufhängung oder Kunststoffstrebe (54) an wenigstens einer Innenwand des Unterputzgehäuse (40) befestigt sind.

9. Unterputzeinsatz nach einem der Ansprüche 6 bis 8, **dadurch gekennzeichnet, dass** die Verbindung der Stromschienen (53) mit den elektrischen Anschlüssen der Leiterplatte (50, 51) durch eine seitlich an der Leiterplatte befindliche leitende Beschichtung (52) erfolgt.

10. Unterputzeinsatzgerät nach einem der Anspruch 1, **dadurch gekennzeichnet, dass** die Stromschienen (53) als leitfähiger metallener Werkstoff in wenigstens einer Innenwand des Unterputzgehäuses (40) vertikal zu seinem Gehäuseboden in längliche Vertiefungen oder Nuten (65) eingebracht, vorzugsweise eingespritzt, sind und die Stromschienen (53) an wenigstens einem ihrer Enden mit einem federnden Element (21) ausgestattet sind, das eine Kontaktierung mit den elektrischen Anschlüssen der Leiterplatten (50, 51) bewirkt.

11. Unterputzeinsatz nach einem der Anspruch 10, **dadurch gekennzeichnet, dass** an wenigstens einer Seitenfläche der Leiterplatte (50, 51) Kontaktierungsstellen angeordnet sind, die mit den Stromschienen (53) über an den Stromschienen befindliche federnden Enden (21), eine elektrische Verbindung herstellen.

12. Unterputzeinsatz nach einem der vorstehenden Ansprüche, **dadurch gekennzeichnet, dass** die in oder auf der Gehäusewand des Unterputzgehäuses (40) geführten Stromschienen eine elektrische Verbindung zwischen der wenigstens einen im Unterputzgehäuse (40) angeordneten Leiterplatte (50, 51) und den elektrischen Anschlüssen eines auf das Unterputzgehäuse (40) aufsteckbarem Bedienoder Funktionsteiles (10) bilden.
